# EUROPEAN PATENT APPLICATION

(11) **EP 0 918 239 A1**
(43) Date of publication of application: **26.05.1999**
(21) Application number: 98309532.4
(22) Date of filing: 20.11.1998
(51) Int. Cl.: G02B 7/182

(54) **Angular tilting mechanism**

(30) Priority: 20.11.1997 EP 97309336
(71) Applicant: Fujifilm Electronic Imaging Limited, London NW3 6HY (GB)
(72) Inventor: Bradburn, Grahame, Stevenage, Herts, SG2 8SP (GB)
(74) Representative: Skone James, Robert Edmund

(57) **Abstract**

An angular tilting mechanism comprises a first member (2) providing a first curved surface (3); and a second member (8) defining a corresponding second curved surface or at least three engagement points (4-6). The first and second members (2,8) are supported one on the other with the curved surface of the first member engaging the corresponding curved surface or engagement points of the second member. At least one screw adjuster (12,13) engages one of the first and second members (2,8) and can be adjusted to cause relative sliding and thus tilting movement between the first and second members. An mirror (1) to be tilted is formed by or attached to the one of the first and second members (2,8) which is moved by the adjuster(s) . The centre of the radius of curvature of the first curved surface is spaced from the centre of the mirror.

## Description

The invention relates to an angular tilting mechanism for controlling the tilt adjustment of an optical mirror.

It is occasionally necessary to tilt mirrors by a small angular measure. This can be achieved by attaching a fine micrometer screw to an appropriate point on the mirror and using this to push on the mirror and provide rotation about a fixed pivot point, about which the object is free to rotate. An example of this known mechanism is described in EP-A-0390926. This is concerned with providing a laser beam bender for use with an articulated robot in the context of a welding machine. In this context, the inventor recognises the problem of known laser beam benders which is that when the mirror is tilted, not only the reflection angle but also the mirror holder is moved linearly and thus the centre of the reflection mirror is also moved. This is disadvantageous. Consequently, the inventor devised a mechanism in which the mirror was mounted on a member having a curved surface which engaged a corresponding curved surface of a support member. The radius of curvature of this curved surface was selected so that its centre was substantially coincident with the centre of the mirror so that when the mirror was tilted, the point of reflection did not shift linearly.

An important application with which the present inventor is concerned is in image scanning apparatus in which it is necessary to obtain a very fine angular adjustment to achieve a very fine control of focused spot position on an exposed record medium in order to achieve good registration of the image output over the record medium. Typically, the degree of registration accuracy requires that the angle of the focused beam be controlled to a resolution of about 20 micro radians. This requires that the resolution of tilting the mirror must be half this value, i.e. 10µ radians. A typical example is a line pitch of 1/50mm. Using the mechanism of EP-A-0390926 would require using a micrometer having a very fine pitch which is not achievable in practice.

Another example of a known tilt mechanism is described in US-A-3588025 but this is similar to the disclosure in EP-A-0390926 in which the centre of radius of curvature of the support surface is substantially coincident with the centre of the mirror.

One method for improving this situation is to attach a leverage arm to the mirror which effectively reduces the sensitivity of adjustment for any given rotation of the adjusting screw therefore allowing either a cheaper adjusting screw to be used or a more precise and less sensitive method of adjustment, or both. The problem with this method is that to achieve a significant increase in mechanical leverage, the additional arm would have to be substantially longer than the original adjustment leverage length provided by the mirror itself. This solution is not always practical because of the extra space required for the leverage arm.

In accordance with one aspect of the present invention, an angular tilting mechanism comprises a first member providing a first curved surface having a radius of curvature; a second member defining a corresponding second curved surface or at least three engagement points, the first and second members being supported one on the other with the first curved surface of the first member engaging the corresponding second curved surface or engagement points of the second member; and at least one adjuster which engages one of the first and second members and can be adjusted to cause relative sliding and thus tilting movement between the first and second members, a mirror to be tilted being formed by or attached to the one of the first and second members which is moved by the adjuster(s), wherein the centre of the radius of curvature of the first curved surface is spaced from the centre of the mirror.

We have realised that, particularly in the case of image scanning apparatus, where a very fine tilt angle is required, much finer than in the prior art, it is acceptable that the mirror may undergo a very small linear shift. Consequently, we do not require that the centre of the radius of curvature of the curved surface is substantially coincident with the centre of the mirror. Indeed, preferably, the centre of the radius of curvature is spaced in front of the mirror and typically will be spaced a significant distance from the mirror.

The or each adjuster may comprise a micrometer screw since this allows very small adjustments to be achieved. Alternatively, some form of electro-mechanical device such as a piezo-electric transducer could be used. This may be controlled via a feedback mechanism or by a predetermined program of movement. This could find some additional applications - possibly in the area of "Adaptive Optics".

In accordance with a second aspect of the present invention, an angular tilting mechanism comprises a first member providing a first curved surface having a radius of curvature; a second member defining a corresponding second, curved surface or at least three engagement points, the first and second members being supported one on the other with the first curved surface of the first member engaging the corresponding curved surface or engagement points of the second member; and at least one screw adjuster which engages one of the first and second members and can be adjusted to cause relative sliding and thus tilting movement between the first and second members, a mirror to be tilted being formed by or attached to the one of the first and second members which is moved by the adjuster(s), wherein the radius of curvature of the first curved surface is at least greater than the maximum leverage distance achievable by an adjusting screw acting directly onto a normal mirror mount.

With this aspect of the invention, instead of attempting to achieve a finer screw pitch, we make the radius of curvature of the curved surface significantly larger than the mirror dimensions. In this way, a much finer adjustment angle can be obtained with the same screw pitch. In the most preferred example, the radius of curvature is at least one metre and is used in conjunction with a screw setting resolution of substantially 0.01mm.

If a tilt in one plane only is required, the members could provide two contacting cylindrical surfaces. For additional degrees of freedom, the curved surface may comprise a part spherical surface the radius of curvature of the surface defining the sensitivity of the adjustment. If the second member defines a curved surface this will have the same radius of curvature as, but opposite sign to, the curved surface of the first member. Effectively, the length of the radius of curvature is equivalent to the length of a leverage arm. It is not essential, however, for the curved surface to be part spherical and other types of curved surface would also be acceptable, particularly in combination with three engagement points. For example, a non-spherical surface could be designed to give a non-linear tilt response to a given amount of adjustment.

In one arrangement, both the first and second members define similarly curved surfaces, one being convex and the other concave. In the preferred arrangement, the curved surface defined by the first member is convex and the second member defines at least three engagement points. These engagement points will define respective locations on a corresponding curved surface.

In some cases, the first and second members may rest one on the other under gravity. However, in preferred examples, means are providing for holding the first and second members in engagement. This means may include guide members and the like but conveniently means are provided for urging the first and second members into engagement with one another. This may include leaf springs or tension springs and the like. The advantage of providing such urging means is that they can accommodate relative movement between the two members while continuing to urge them together.

When the second member includes engagement points, these may be provided by bearings such as ball bearings.

Typically, three such engagement points are provided although more than three are also feasible in some cases.

Typically, more than one adjuster will be provided to enable adjustments to be made in more than one direction.

The curved surface provided by the first member can conveniently be provided by a suitable convex lens or mirror since these can be manufactured to very high accuracy. In addition, an optically polished surface enables smooth adjustment and better setting resolution.

The mirror to be tilted could be defined by the one of the first or second members which is moved by the adjuster(s) or be attached to that member. An important application of this invention is in the control of the tilt angle of a plane mirror. In this case, the plane mirror will be mounted to the first or second member. In a typical application, the mirror should be thermally stabilised and mounted in such a manner that no stress is introduced in the substrate otherwise the reflecting surface of the mirror will become distorted and introduce abberations in the reflected beam. One possible way of achieving this is to manufacture the mirror in two halves, the front half containing the reflecting surface and the back half containing the curved surface. The two halves are joined by a compliant material which can reduce the stress in the reflecting surface due to hard mounting of the second, curved, half. The compliant material also allows for thermal expansion of the reflecting half.

An example of an application in which a tilting mirror assembly of this kind is useful is image scanning apparatus comprising a record medium support; a radiation beam source for generating a beam of radiation modulated with image information; and a beam guide assembly for guiding the radiation beam towards the record medium support, the record medium support and beam guide assembly being relatively movable so that the beam scans across the support, and the beam guide assembly including an angular tilting mechanism according to the invention.

In this application, preferably the radius of curvature of the first curved surface is established by considering the required focused spot position resolution accuracy on the recording medium, according to image registration requirements, together with the focal length of the final focusing lens and the adjusting screw setting resolution. This enables the finest and correct adjustment control to be achieved. In one example, the radius of curvature of the first curved signal is substantially equal to the optical distance from the mirror to the record medium support.

Examples of such image scanning apparatus are internal drum scanners. The radiation beam may be modulated downstream of the source, for example using an acousto-optic modulator or the beam source itself could be controlled to produce a modulated beam.

Some examples of angular tilting mechanisms according to the invention will now be described with reference to the accompanying drawings, in which:-
Figure 1A is a plan view of a first example;
Figure 1B is a section taken on the line B-B in Figure 1A;
Figures 2A and 2B are views similar to Figures 1A and 1B but of a second example; and,
Figure 3 illustrates image scanning apparatus incorporating a mirror assembly according to either of the examples shown in Figures 1 and 2.

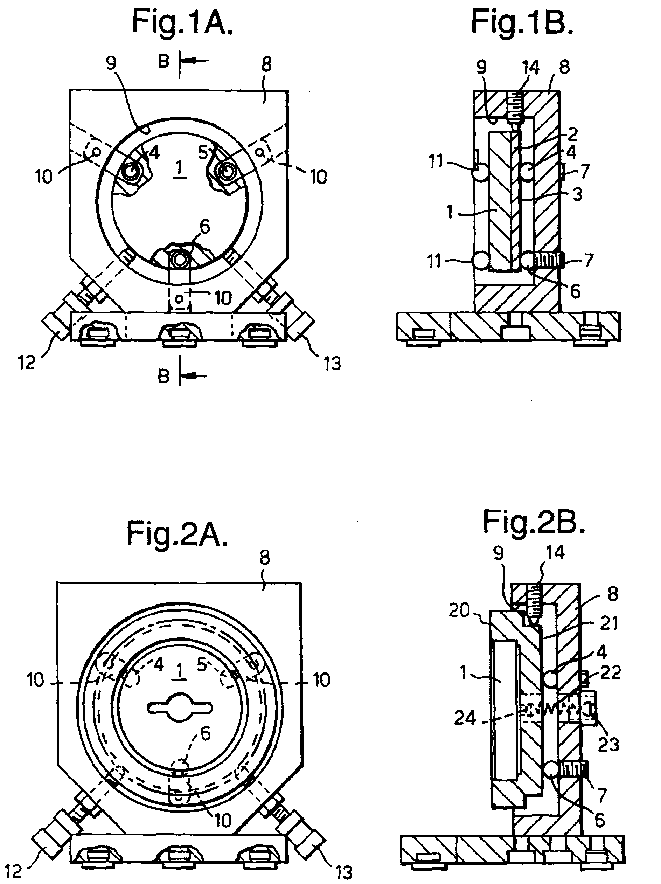

In the example shown in Figures 1A and 1B, a plane mirror 1 is shown whose back surface is bonded by silicon based adhesive to the plane surface of a plano-convex lens 2. In this case, the lens 2 is used solely to provide a convex, part spherical surface 3. In one example, the mirror 1 has a diameter of 50mm while the radius of curvature of the surface 3 is about 1m. This surface 3 rests on three ball bearings 4-6 substantially equi-angularly located beneath the lens 2. Each ball is set on a hexagon socket set screw 7 whose heights are adjustable to achieve a coarse adjustment of the mirror position. The set screws 7 are mounted in respective screw threaded apertures in a support housing 8 defining a cavity 9 within which the mirror 1 is located.

In order to maintain the mirror 1 and lens 2 against the ball bearings 6, a set of three leaf springs 10 are fixed to the front surfaces of the support housing 8 and extend partially over the front of the mirror 1 in alignment with respective balls 4-6, each leaf spring exerting a force of about 10N on the mirror 1. Between each leaf spring and the mirror 1 is provided a respective steel ball 11.

It will be noted that since the part spherical surface 3 of the lens 2 engages the three ball bearings 4-6, these bearings define respective engagement points lying on a surface having substantially the same curvature as the surface 3.

In order to achieve relative sliding movement between the mirror 1 and lens 2 on the one hand and the support housing 8 on the other, a pair of adjusters 12,13 in the form of micrometer screws are mounted in the support housing 8 and extend into engagement with the side of the mirror 1 (Figure 1A) . Each adjuster 12,13 is aligned with an axis orthogonal to the curved surface defined by the ball bearings 4-6 and passing through its centre. In order to maintain engagement between the adjusters 12,13 and the mirror 1, a spring loaded plunger 14 (exerting a force of about 10N) is mounted in the housing 8 opposite to the adjusters 12,13.

When one of the adjusters 12,13 is adjusted, this will force the mirror 1 away from that adjuster causing it to slide relatively to the ball bearings 4-6 and thus tilt slightly. If d is the distance moved by the adjustment screw and R is the radius of curvature of the surface 3 then the mirror 1 will rotate on its mount by an angle of d/R radians for small adjustment. In the preferred example, the resolution of the micrometer screws is about 0.01mm.

A second example of a tilting mechanism is shown in Figures 2A and 2B. This is similar to the example shown in Figures 1A and 1B and those components which are the same in both the drawings have been given the same reference numerals. The main difference is the manner in which the mirror 1 is supported. In this case, the mirror 1 is mounted in an aluminium holder 20 partially located within the cavity 9 of the support housing 8. A rear wall 21 of the holder 20 is part spherical and is urged against the ball bearings 4-6 via a tension spring 22 (exerting a force of about 15N) which extends from an anchorage 23 on the support housing 8 and an anchorage 24 in the holder 20.

As in the previous example, the tilt of the mirror 1 can be adjusted by adjusting the micrometer screws 12,13.

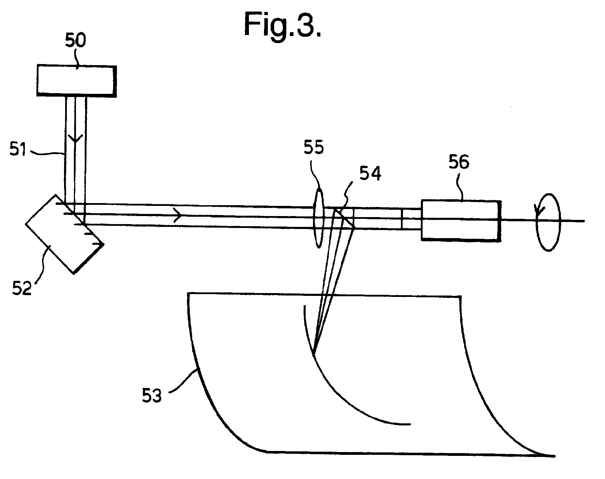

Figure 3 illustrates schematically an internal drum image scanner incorporating a mirror assembly of the type shown in either Figures 1A and 1B or Figures 2A and 2B. The scanner comprises a light source 50 such as a laser which is controlled from a source (not shown) to produce a modulated and collimated laser beam 51 which impinges on a mirror assembly 52 constructed in accordance with either Figures 1A and 1B or Figures 2A and 2B. The beam 51 is reflected by the mirror 1 along the axis of a cylindrical drum 53 which supports a record medium (not shown) in use, that axis being coincident with the axis of rotation of a mirror 54. The beam passes through a focusing lens 55 to impinge on the mirror 54 where it is redirected onto the record medium on the drum 53. The mirror 54 is rotated by a motor 56. The apparatus shown in Figure 3 is conventional apart from the mirror assembly 52 which can be used to achieve a fine tilt, as previously described, to correct for small errors of alignment between the collimated light beam 51 and the axis of the spinning mirror 54. This helps to reduce position errors (i.e. ultimately image registration errors) of the focus beam on the record medium.

The radius of curvature of the surface 3 is determined from consideration of focused spot position resolution accuracy, the focal length of the lens 55, and the adjusting screw setting resolution. In this case, a fineness of adjustment of the spot position on the recording medium of approx 6 microns is achieved.

## Claims

1. An angular tilting mechanism comprising a first member providing a first curved surface having a radius of curvature; a second member defining a corresponding second curved surface or at least three engagement points, the first and second members being supported one on the other with the first curved surface of the first member engaging the corresponding second curved surface or engagement points of the second member; and at least one adjuster which engages one of the first and second members and can be adjusted to cause relative sliding and thus tilting movement between the first and second members, a mirror to be tilted being formed by or attached to the one of the first and second members which is moved by the adjuster(s), wherein the centre of the radius of curvature of the first curved surface is spaced from the centre of the mirror.

2. A mechanism according to claim 1, wherein the radius of curvature of the first curved surface is located in front of the mirror.

3. A mechanism according to claim 1 or claim 2, wherein the or each adjuster comprises a micrometer screw.

4. An angular tilting mechanism comprising a first member providing a first curved surface having a radius of curvature; a second member defining a corresponding second, curved surface or at least three engagement points, the first and second members being supported one on the other with the first curved surface of the first member engaging the corresponding curved surface or engagement points of the second member; and at least one screw adjuster which engages one of the first and second members and can be adjusted to cause relative sliding and thus tilting movement between the first and second members, a mirror to be tilted being formed by or attached to the one of the first and second members which is moved by the adjuster(s), wherein the radius of curvature of the first curved surface is at least greater than the maximum leverage distance achievable by an adjusting screw acting directly onto a normal mirror mount.

5. A mechanism according to claim 4, wherein the radius of curvature of the first curved surface is at least 10⁵ times the resolution setting of the adjuster screw.

6. A mechanism according to claim 4 or claim 5 and any of claims 1 to 3.

7. A mechanism according to any of the preceding claims, wherein the first member has a convex curved surface and the second member provides at least three engagement points.

8. A mechanism according to claim 7, wherein the adjuster(s) engages the first member.

9. A mechanism according to any of the preceding claims, further comprising means for holding the first and second members in engagement.

10. A mechanism according to claim 9, wherein the holding means urges the first and second members together.

11. A mechanism according to claim 10, wherein the holding means include one or more leaf springs, and/or a tension spring.

12. A mechanism according to any of the preceding claims, wherein the engagement points are defined by respective bearings, for example ball bearings.

13. A mechanism according to any of the preceding claims, wherein the mirror is planar.

14. A mechanism according to any of the preceding claims, wherein the first and second curved surfaces are part spherical.

15. Image scanning apparatus comprising a record medium support; a radiation beam source for generating a beam of radiation modulated with image information; and a beam guide assembly for guiding the radiation beam towards the record medium support, the record medium support and the beam guide assembly being relatively movable so that the beam scans across the support, and the beam generating assembly including an angular tilting mechanism according to any of the preceding claims.

16. Apparatus according to claim 15, wherein the radius of curvature of the first curved surface is substantially equal to the optical distance from the mirror to the record medium support.
